# EUROPÄISCHE PATENTSCHRIFT

(11) **EP 0 533 730 B1**
(45) Veröffentlichungstag und Bekanntmachung des Hinweises auf die Patenterteilung: **20.03.1996**
(21) Anmeldenummer: 91910624.5
(22) Anmeldetag: 06.06.1991
(51) Int. Cl.: C08G 18/08, C08G 18/42

(54) **BESCHICHTUNGSMITTEL**
COATING MATERIALS
ENDUITS

(30) Priorität: 15.06.1990 DE 4019171
(43) Veröffentlichungstag der Anmeldung: 31.03.1993
(73) Patentinhaber: Henkel Kommanditgesellschaft auf Aktien, D-40191 Düsseldorf (DE)
(72) Erfinder: HÖFER, Rainer, D-4000 Düsseldorf 13 (DE); GRÜTZMACHER, Roland, D-5603 Wülfrath (DE); KAINDEL, Gerhard, D-4010 Hilden (DE)
(86) Internationale Anmeldenummer: EP9101052
(87) Internationale Veröffentlichungsnummer: WO9119750

(56) Entgegenhaltungen:
- EP-A- 0 220 000
- BE-A- 717 432
- US-A- 4 098 743
- US-A- 4 124 552
- US-A- 4 171 391
- US-A- 4 203 883

## Beschreibung

Die Erfindung betrifft Beschichtungsmittel, die wäßrige Polyurethandispersionen enthalten, wobei die den Polyurethandispersionen zugrundeliegenden Polyurethane aufgebaut sind aus einer Polyolmischung, die zumindest überwiegend aus Polycaprolactondiolen besteht sowie die Verwendung derartiger Beschichtungsmittel zur Herstellung von Überzügen und Beschichtungen auf flexiblen Substraten, vorzugsweise auf Leder, Lederaustauschstoffen und/oder flexiblen Kunststoffen.

Beschichtungsmittel auf Basis wäßriger Polyurethandispersionen sind bereits seit langem bekannt. In der Regel werden die den Polyurethandispersionen zugrundeliegenden Polyurethane durch Polyaddition von Polyolen mit Diisocyanaten hergestellt, wobei ein Einkondensieren von zur Salzbildung befähigten Komponenten sich auf die Dispergierbarkeit vorteilhaft auswirkt. Bei Anwesenheit von Kettenverlängerungsmitteln, wie Diaminen, entstehen Polyurethanharnstoffdispersionen, die ebenfalls als Beschichtungsmittel zur Anwendung kommen.

Aus der europäischen Patentschrift 148 970 sind stabile, wäßrige Dispersionen von Polyurethanharnstoffen bekannt, die unter anderem als Überzugs- und Imprägniermittel für alle Arten von Substraten, als Bindemittel in Farben, als Kleber und als Hilfsmittel in der Papierindustrie verwendet werden können. Die den Dispersionen zugrundeliegenden Polyurethanharnstoffen enthalten als inneren Emulgator chemisch eingebaute anionische Gruppen und eine Mischung von flüchtigen und nicht-flüchtigen Kationen als Gegenionen. Über die Anteile an flüchtigen Kationen wird die Resistenz gegen Wasserquellung, über die der nicht-flüchtigen Kationen die Hydrolysestabilität der Filme gesteigert.

Auch aus der deutschen Offenlegungsschrift 26 24 442 sind Polyurethanharnstoffdispersionen bekannt, die einen einkondensierten inneren Emulgator enthalten. Die dort beschriebenen wäßrigen Polyurethanharnstoffdispersionen werden in der deutschen Offenlegungsschrift 36 25 605 zur Herstellung von wäßrigen Pigmentzubereitungen für wäßrige und gegebenenfalls alkoholische Tief-, Flexo- und Siebdruckfarben verwendet. Die erhaltenen Pigmentzubereitungen sind alkohol- sowie lagerstabiler und weisen verbesserte Haftfestigkeiten und Trocknungsgeschwindigkeiten auf.

In der deutschen Offenlegungsschrift 37 02 615 werden Beschichtungsund Zurichtmittel für Leder auf Basis wäßriger Polyurethandispersionen beschrieben. Die den Polyurethandispersionen zugrundeliegenden Polyurethane werden unter Mitverwendung einer Polyolmischung bestehend aus Polyesterpolyolen und gegebenenfalls Polyetherpolyolen sowie den zwingend vorhandenen oleochemischen Polyolen mit mindestens 3 funktionellen Hydroxylgruppen erhalten. Die mit diesen Polyurethandispersionen beschichteten und zugerichteten Leder oder Lederaustauschstoffen genügen in ihren Eigenschaften allen Anforderungen hinsichtlich Strapazierfähigkeit, Sprödigkeit, Naß- und Trockenreibfestigkeit, Geschlossenheit und Glanz. Sie weisen zudem hohe Echtheitswerte auf, ohne daß die Verwendung der toxikologisch bedenklichen Aziridine zur Vernetzung notwendig wären, wodurch sie insbesondere als Schlußstrich geeignet sind.

EP-A-0 220 000 beschreibt Beschichtungsmittel auf Basis wässriger Polyurethandispersionen. Die Polyolkomponente in Beispiel 11 enthält eine Mischung von zwei Polycaprolactondiolen mit einem MW von 500 bzw. 1250. US-A-4 124 552 beschreibt Beschichtungsmittel auf Basis wässriger Polyurethandispersionen, die unter Verwendung von Polycaprolactondiolen hergestellt werden.

Obgleich die oben beschriebenen Beschichtungsmittel auf Basis wäßriger Polyurethandispersionen in ihren Eigenschaften verbessert sind, werden bis in die jüngste Zeit hinein, beispielsweise in der Lederindustrie beim Zurichten von Leder, Polyurethane lieber aus organischer Lösung auf Leder und Lederaustauschstoffen appliziert. Auch bei den Druckfarben liegt der Verbrauch von lösemittelhaltigen Farben im Verhältnis zu dem Verbrauch von Wasserfarben, in denen Wasser die alleinige oder neben Alkoholen hauptsächliche Flüssigkeitskomponente darstellt, noch deutlich höher.

Daher besteht für die Fachwelt weiterhin der Wunsch, daß Beschichtungsmittel auf Basis von wäßrigen Polyurethandispersionen in ihren Eigenschaften verbessert werden, vor allem im Hinblick auf Haftung, Härte, Wasser- und Alkoholfestigkeit, Trocknungsverhalten und ihrer Benetzung des Substrats, um im gleichen Ausmaß wie die lösemittelhaltigen Polyurethansysteme einsatzfähig zu sein.

Aufgabe der vorliegenden Erfindung ist es daher, Beschichtungsmittel auf Basis wäßriger Polyurethandispersionen zur Verfügung zu stellen, die im Hinblick auf Alkoholfestigkeit, Haftung und die vorgenannten anderen Eigenschaften verbessert sind.

Gegenstand der vorliegenden Erfindung sind Beschichtungsmittel für flexible Substrate, enthaltend wäßrige Polyurethandispersionen deren Polyurethane aufgebaut sind aus einer zumindest überwiegend aus Polycaprolactondiolen bestehenden Polyolmischung, einer Isocyanatmischung mit einer mittleren NCO-Funktionalität über 1,5 im Verhältnis NCO : OH wie 0,9 : 1 bis 2,5 : 1 sowie einer in wäßriger Lösung zur Salzbildung befähigten funktionellen Komponente und gewünschtenfalls eines Kettenverlängerungsmittels, dadurch gekennzeichnet, daß die Polycaprolactondiole Mischungen zweier verschiedener Polycaprolactondiole A und B darstellen, wobei Polycaprolactondiol A ein Molekulargewicht von 1.500 bis 2.250 sowie eine Hydroxylzahl zwischen 45 und 75 und Polycaprolactondiol B ein Molekulargewicht von 2.750 bis 4.000 sowie eine Hydroxylzahl von 25 bis 45 aufweist.

Die den erfindungsgemäß eingesetzten Polyurethandispersionen zugrundeliegenden Polyurethane basieren auf einer ganz oder teilweise aus Polycaprolactondiolen bestehenden Polyolmischung. Die deutsche Offenlegungsschrift 26 24 442 sowie die europäischen Patentschrift 148 970 benennen in ihrer breiten Offenbarung bei der Gruppe der Polyesterpolyole auch Polycaprolactone. Es findet sich jedoch kein Hinweis darauf, daß genau Polycaprolactondiole die geeignete Basis für Polyurethandispersionen für Beschichtungsmittel darstellen. Außerdem werden in der deutschen Offenlegungsschrift 26 24 442 unter Polycaprolactone die verschiedesten Produkte verstanden, die man erhält, wenn man ein cyclisches Lacton, beispielsweise 6-Caprolacton, mit einem Polyol, einem säureenthaltenden Polyol oder einer Hydroxysäure umsetzt. Umsetzungen mit Hydroxysäuren führen jedoch zu ringgeöffneten Produkten, die nur über eine freie Hydroxylgruppe verfügen. Und diese sind für den erfindungsgemäßen Zweck nicht geeignet. Zudem werden stets nur Polycaprolactone einer Art und keine Mischungen von Polycaprolactonen als Polyolkomponente offenbart.

Unter den erfindungsgemäß eingesetzten Polycaprolactondiolen werden hier Polyesterpolyole verstanden, die durch ringöffnende Polymerisation von 6-Caprolacton, dargestellt werden können und an beiden Enden jeweils eine Hydroxylgruppe aufweisen. Solche Produkte können beispielsweise großtechnisch nach dem sogenannten Interox-Verfahren in Gegenwart von Lewis-Säuren oder organischen Saüren oder AlkydZinn-Verbindungen oder Alkyl-Titan-Verbindungen als Katalysatoren bei Temperaturen zwischen 20 °C bis etwa 150 °C hergestellt werden. Die nach diesem Verfahren hergestellten Polycaprolactondiole werden im Rahmen der Erfindung aufgrund ihrer sehr engen Molekulargewichtsverteilung bevorzugt.

Die erfindungsgemäß eingesetzten Polycaprolactondiole werden durch ringöffnende Polymerisation von ε-Caprolacton mit aliphatischen und/oder aromatischen Diolen hergestellt. Unter den aliphatischen Diolen sind gesättigte, ungesättigte, geradkettige und verzweigte Diole wie Ethylenglykol, Butandiol-1,3, Butandiol-1,4, Butendiol, Neopentylglykol gleichermaßen geeignet. Für den erfindungsgemäßen Zweck spielen das Molekulargewicht und die Hydroxylzahl der Polycaprolactondiole eine besondere Rolle. Bei der ringöffnenden Polymerisation kann über die eingesetzten Mengenverhältnisse der Diole zu den ε-Caprolactonen der Oligomerisierungsgrad und damit das Molekulargewicht und die Hydroxylzahl der Polycaprolactondiole in bekannter Weise gesteuert werden. Geeignete Polycaprolactondiole weisen ein Molekulargewicht von 230 bis 10.000, vorzugsweise von 1.000 bis 5.000 sowie eine Hydroxylzahl von 15 bis 540, vorzugsweise von 25 bis 140, auf. Die Mischungen der verschiedenen Polycaprolactondiole unterscheiden sich in ihrem Molekulargewicht innerhalb der angegebenen Grenzen. Die Mischungen bestehen aus zwei verschiedenen Polycaprolactondiolen in denen das eine Diol A ein Molekulargewicht von 1.500 bis 2.250, und eine Hydroxylzahl zwischen 45 und 75 und das andere Diol B ein Molekulargewicht von 2.750 bis 4.000, und eine Hydroxylzahl von 25 bis 45 aufweist. Insbesondere geeignet sind Mischungen von Diol A mit Diol B im Gewichtsverhältnis A:B wie 1:10 bis 10:1, vorzugsweise von 2:7 bis 7:2 und insbesondere von 3:1 bis 1:3. Bei Mitverwendung der oben beschriebenen Polycaprolactondiolmiscnungen werden Beschichtungsmittel erhalten, die hervorragende Eigenschaften, vor allem hinsichtlich der Härte der Beschichtungen besitzen.

Die den erfindungsgemäß eingesetzten Polyurethandispersionen zugrundeliegenden Polyurethane basieren auf einer Polyolmischung, die, bezogen auf Polyolmischung, zu 60 Gew.-%, vorzugsweise zu 85 Gew.-% und insbesondere vollständig, aus Polycaprolactondiolen besteht. Die Polyolmischung kann weiterhin, bezogen auf Polyolmischung, bis zu 40 Gew.-%, vorzugsweise bis zu 15 Gew.-%, andere übliche Polyole wie Polyetherpolyole, Polytetrahydrofuran und/oder Polyesterpolyole mit im Mittel 2 bis höchstens 4 Hydroxylgruppen enthalten. Ganz allgemein gilt, daß die mitverwendeten anderen Polyole im wesentlichen linear sind und deren Molekulargewicht zwischen 300 und 20.000, vorzugsweise zwischen 500 und 6.000, liegt. Als Polyetherpolyole seien z.B. die Polymerisationsprodukte des Ethylenoxids, Propylenoxids, Butylenoxids sowie ihre Misch- oder Pfropfpolymerisationsprodukte sowie die durch Kondensation von mehrwertigen Alkoholen oder Mischungen derselben und die durch Alkoxylierung von mehrwertigen Alkoholen, Amine, Polyamine und Aminoalkohole gewonnenen Polyetherpolyole genannt. Unter Berücksichtigung der obengenannten Bedingungen für die Polyole können auch Polyester, Polyesteramide und Polyamide aus mehrwertigen gesättigten und ungesättigten Carbonsäuren bzw. deren Anhydriden und mehrwertigen gesättigten und ungesättigten Alkoholen, Aminoalkoholen, Diaminen, Polyaminen und ihren Mischungen als weitere Polyolkomponente eingesetzt werden sowie Polyterephthalate oder Polycarbonate. Zu dem Aufbau der Polyurethane können als Polyolkomponente auch höhermolekulare Polymerisate oder Kondensate wie z.B. Polyether, Polyacetale, Polyoxymethylene mitverwendet werden. Bevorzugt im Sinne der Erfindung werden die den Polyurethandispersionen zugrundeliegenden Polyurethane aufgebaut aus Polyolmischungen, die ausschließlich aus Polycaprolactondiolen bestehen. Und insbesondere die aus den bereits beschriebenen Polycaprolactondiol- Mischungen bestehen, die die Polycaprolactondiole A und B mit den angegebenen Molekulargewichten, Hydroxylzahlen und in den angegebenen Gewichtsverhältnissen von A und B enthalten.

Die den erfindungsgemäß eingesetzten Polyurethandispersionen zugrundeliegenden Polyurethane basieren auf einer Isocyanatmischung mit einer mittleren NCO-Funktionalität von über 1,5, vorzugsweise mit einer mittleren NCO-Funktionalität von 2 bis 3. Als Isocyanate sind alle monofunktionellen Isocyanate, Diisocyanate und mehrfunktionelle Isocyanate für sich oder in Mischungen geeignet, solange die mittlere NCO-Funktionalität die obengenannte Bedingung erfüllt. Vorzugsweise werden aromatische und aliphatische Diisocyanate eingesetzt wie 1,5-Naphthylendiisocyanat, 4,4'-Diphenylmethandiisocyanat, 4,4'-Dipheryldimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat, die Isomeren des Toluylendiisocyanat, gegebenenfalls in Mischung, 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethyl-cyclohexan, chlorierte und bromierte Diisocyanate, phosphorhaltige Diisocyanate, 4,4'-Diisocyanatophenyl-perfluorethan, Tetramethoxybutan-1,4-diisocyanat, Butan-1,4-diisocyanat, Hexan-1,6-diisocyanat, Dicylohexylmethan-diisocyanat, Cyclohexan-1,4-diisocyanat, Ethylendiisocyanat, Phthalsäure-bis-isocyanatoethylester, ferner Polyisocyanate mit reaktionsfähigen Halogenatomen, wie 1-Chlormethylphenyl-2,4-diisocyanat, 1-Brommethylphenyl-2,6-diisocyanat, 3,3-Bischlormethylether-4,4'-diphenyldiisocyanat. Schwefelhaltige Polyisocyanate erhält man beispielsweise durch Umsetzung von 2 mol Hexamethylen-diisocyanat mit 1 mol Thiodiglykol oder Dihydroxydihexylsulfid. Weitere wichtige Diisocyanate sind Trimethylhexamethylendiisocyanat, 1,4-Diisocyanatobutan, 1,2-Diisocyanatododecan, Tetramethylxyloldiisocyanat und Dimerfettsäurediisocyanat. Bevorzugt werden aliphatische Diisocyanate. Von diesen wiederum sind cyclische oder verzweigte aliphatische Diisocyanate wie Isophorondiisocyanat sowie die bereits genannten Hexan-1,6-diisocyanat sowie Dicyclohexylmethandiisocyanat besonders brauchbar.

Die den erfindungsgemäß eingesetzten Polyurethandispersionen zugrundeliegenden Polyurethane haben weiterhin als wichtigen Bestandteil eine in wäßriger Lösung zur Salzbildung befähigte funktionelle Gruppe, die als eine Art innerer Emulgator zu verstehen ist. Als solche, in wäßriger Lösung zur Salzbildung befähigte funktionelle Gruppe werden Dihydroxyverbindungen von Carbonsäuren und/oder Sulfonsäuren eingesetzt. Diese Verbindungen können entweder als solche eingesetzt werden oder sie können in situ hergestellt werden. Um ionisierbare carbonsäuregruppentragende Verbindungen in das Polyurethan einzubringen, kann der Fachmann den Polyolen Dihydroxycarbonsäuren zugeben. Bevorzugte Dihydroxycarbonsäuren sind 2,2-Dihydroxycarbonsäuren und davon insbesondere die Dimethylolpropionsäure.

In den erfindungsgemäß eingesetzten Polyurethandispersionen liegen die Polymere in Salzform vor. Bei den bevorzugten mit Carbonsäuren modifizierten Polymeren liegen als Gegenionen Alkalimetallsalze, Ammoniak oder Amine, d.h. primäre, sekundäre oder tertiäre Amine vor. Die zur Salzbildung befähigten Gruppen können durch die Gegenionen teil- oder vollständig neutralisiert werden. Auch ein Überschuß an Neutralisationsmittel ist möglich.

Gewünschtenfalls können spezielle Kettenverlängerungsmittel mit mindestens einem basischen Stickstoffatom wie z.B. mono-, bis- oder polyoxalkylierte aliphatische, cycloaliphatische, aromatische oder heterocyclische primäre Amine eingesetzt werden. Vorzugsweise werden jedoch lediglich geringe Mengen und insbesondere keine Kettenverlängerungsmittel eingesetzt. Bevorzugt werden gegenüber Isocyanatgruppen reaktive Diamine eingesetzt.

Zur Herstellung der für die erfindungsgemäßen Zwecke insbesondere geeigneten Polyurethane werden Polyolmischungen mit der Isocyanatmischung im Verhältnis von NCO:OH wie 0,9:1 bis 2,5:1 und vorzugsweise in fast äquimolarem Verhältnis bzw. in leichtem Überschuß an Isocyanat polymerisiert. Für die Bereitstellung von wasserklaren Polyurethandispersionen ist es zweckmäßig, die zur Salzbildung befähigte Komponente, berechnet als Dimethylolpropionsäure, in Mengen von 1 bis 30 Gew.-%, vorzugsweise von 2 bis 20 Gew.-% und insbesondere von 10 bis 18 Gew.-%, bezogen auf Polyol, einzusetzen. Weiterhin hängt die Transparenz vom Neutralisationsgrad ab. Dabei kann der Fachmann durch wenige Vorversuche leicht feststellen, ab welcher Menge Neutralisationsmittel ein ausreichender Grad an Transparenz erreicht ist. Im allgemeinen sollte so wenig wie möglich von diesen Stoffen eingesetzt werden, da ansonsten die Wasserfestigkeit des Beschichtungsfilms darunter leiden kann.

An sich können die wäßrigen Polyurethandispersionen nach den bekannten Verfahren wie z.B. dem Acetonverfahren (D. Dieterich, Angewandte Molekulare Chemie, 98, 133 (1981)) sowie nach dem Verfahren der DE 15 95 602 hergestellt werden. Neue Verfahren zur Herstellung von Polyurethandispersionen zitiert die DE 36 03 996 in dem dort angegebenen Stand der Technik. Vorzugsweise werden die Polyurethandispersionen nach dem sogenannten Ein-Topf- oder Zwei-Topf-Verfahren hergestellt. Nach dem Ein-Topf-Verfahren wird die Polyolmischung zusammen mit den zur Salzbildung befähigten Komponenten in einem inerten Lösungsmittel unter Erwärmen vorgelöst. Sodann wird die Isocyanatmischung in Gegenwart von weiterem inerten Lösungsmittel zugegeben und bei einer Temperatur von ungefähr 50°C bis ungefähr 120°C innerhalb von einer bis 6 Stunden polymerisiert. Schließlich wird eine starke Base zugegeben, die die zur Salzbildung befähigten Gruppen zu ionisieren vermag. Zuletzt wird Wasser unter den für den Fachmann üblichen Reaktionsbedingungen zugegeben. Starkes Rühren erhöht die Dispergierbarkeit der Polyurethane in Wasser. Nach dem Zwei-Topf-Verfahren erfolgt die Umsetzung der Polyolmischung mit der Isocyanatmischung in gehabter Weise. Dazu wird das auf vorher beschriebene Weise hergestellte Polyurethan-Prepolymer in einem mit Wasser beschickten zweiten Topf eingerührt und erst anschließend das Neutralisationsmittel, gegebenenfalls das Kettenverlängerungsmittel zugegeben.

Die erfindungsgemäß eingesetzten Polyurethandispersionen weisen einen Feststoffgehalt von über 25 Gew.-%, vorzugsweise von 30 bis 60 Gew.-% und insbesondere von 35 bis 55 Gew.-%, bezogen auf wäßrige Polyurethandispersion auf. Sie sind durch eine Viskosität im Bereich von 00,1 Pas bis 150 Pas, vorzugsweise von 0,1 bis 10 Pas sowie durch eine mittlere Teilchengröße der Polyurethane im Bereich von 40 bis 400 nm, vorzugsweise von 100 bis 300 nm und insbesondere von 125 bis 250 nm, gekennzeichnet.

Die erfindungsgemäßen Beschichtungsmittel enthalten die oben beschriebenen wäßrigen Polyurethandispersionen in Mengen von 5 bis 80 Gew.-%, vorzugsweise von 20 bis 75 Gew.-% und insbesondere von 50 bis 70 Gew.-%, bezogen auf Beschichtungsmittel. Als weitere Bestandteile enthalten die Beschichtungsmittel Wasser, vorzugsweise entionisiertes Wasser, in Mengen von 2 bis 80 Gew.-%, vorzugsweise von 10 bis 70 Gew.-%, sowie ein in Wasser mischbares organisches Lösungsmittel in Mengen von 0 bis 50 Gew.-%, vorzugsweise von 0 bis 30 Gew.-%. Als geeignete in Wasser mischbare organische Lösungsmittel sind in erster Linie 1-wertige aliphatische Alkohole von 1 bis 4 Kohlenstoffatomen wie Methanol, Ethanol, n- und Isopropanol sowie n-und Isobutanole oder Mischungen daraus zu nennen. Des weiteren können in den erfindungsgemäßen Beschichtungsmitteln entsprechend ihren Einsatzzwecken weitere übliche Hilfszusätze wie Pigmente, Netz- und Konservierungsmittel, Absetzmittel und ähnliches in Mengen von 0 bis 80 Gew.-% enthalten sein. Werden die erfindungsgemäßen Beschichtungsmittel als Beschichtungs- und Zurichtmittel für Leder und Lederaustauschstoffe eingesetzt, so empfiehlt es sich zu den wäßrigen Polyurethandispersionen die üblichen Zusätze wie Homo- und Copolymerisate der Acrylsäure und von Acrylsäureestern mit Styrol, Acrylamid, Acrylnitril, Vinylacetat sowie Vinylester im allgemeinen und/ oder Vinylethern (vereinfacht: Polyacrylate), kolloidales Kasein, modifizierte Silikone mit wäßrigen Emulsionen natürlicher oder synthetischer Wachse bzw. Wachsester, Antischaummitteln und Pigmentzubereitungen abzumischen.

Der Vorteil der Beschichtungs- und Zurichtmittel für Leder entsprechend den vorliegenden erfindungsgemäßen Beschichtungsmitteln besteht insbesondere darin, daß besonders hohe Echtheitswerte erreicht werden, ohne daß beispielsweise toxikologisch bedenkliche Aziridine oder technisch aufwendige Durchstrahlungseinrichtungen zur Vernetzung zu benutzen sind. Sie eignen sich daher hervorragend für die Grundierung insbesondere aber jedoch als Schlußstrich (Top Coat). Zudem zeigen damit beschichtete Leder verbesserte Werte bei der Naßreibechtheit.

Werden zu den erfindungsgemäßen Beschichtungsmitteln organische Pigmente wie Azopigmente, Azamethine, Azaporphine, Chimacridone, Flavanthron-, Anthanthron- und Pyranthronkörper oder anorganische Pigmente wie Weiß- und Buntpigmente oder Mischoxidpigmente bzw. Verschnittpigmente und Ruß eingesetzt, so lassen sich hervorragende wäßrige und/oder wäßrig-alkoholische Tief-, Flexo- oder Siebdruckfarben für flexible Substrate wie elastische Kunststoffe herstellen. Derartige Druckfarben enthalten die beschriebenen Pigmente in Mengen von 0,5 bis 80 Gew.-%, vorzugsweise von 1 bis 70 Gew.-% und insbesondere von 2 bis 60 Gew.-%, bezogen auf Druckfarbe. Auch bei dieser Anwendung ist es oft sinnvoll, einzelne der bereits bei der Lederbeschichtung genannten Zusätze wie Polyacrylate und/oder Wachsemulsionen mitzuverwenden.

Insgesamt zeichnen sich die erfindungsgemäßen Beschichtungsmittel durch ein hohes Vermögen zur Pigmentdispergierung aus sowie einer guten Pigmentverträglichkeit. Durch Aufbringen der erfindungsgemäßen Beschichtungsmittel in üblicher Weise werden Filme mit verbesserter Filmbildung (Trocknung), hoher Filmhärte, verbesserter Filmflexibilität, Haftung, Alkoholfestigkeit, Abriebfestigkeit und Knickelastizität erhalten.

Die Herstellung der erfindungsgemäßen Beschichtungsmittel erfolgt in üblicher Weise, bei Vorhandensein von Pigmenten je nach Kornhärte der eingesetzen Pigmente, beispielsweise mit Rührwerken, Dissolvern, Rotor-Stator-Mühlen, Kugelmühlen, Rührwerkskugelmühlen und in Schnellmischern.

Ein weiterer Gegenstand der vorliegenden Erfindung ist die Verwendung der Beschichtungsmittel zur Herstellung von Überzügen und Beschichtungen auf beliebigen flexiblen Substraten, vorzugsweise auf Leder und Lederaustauschstoffen und/oder auf flexiblen Kunststoffen wie Weich-PVC, Polyolefinen und ähnlichem. Wie bereits oben beschrieben, kann je nach Verwendungszweck der Beschichtungsmittel neben den wäßrigen Polyurethandispersionen, dem Wasser und gegebenenfalls den Lösungsmitteln weitere Zusätze enthalten sein. Bei Verwendung der erfindungsgemäßen Beschichtungsmittel werden Überzüge erhalten mit verbesserten Haftungseigenschaften, verbesserter Pigmentaufnahme sowie die höhere Alkoholbeständigkeit, die aus den bereits beschriebenen Eigenschaften hervorzuheben sind.

### Beispiele

### Allgemeine Herstellvorschrift 1

In einem Polymerisationskessel mit Rührer, Heiz- und Kühlmantel sowie Rückflußkühler wurden unter Stickstoff die Polyole aufgeschmolzen. Unter Rühren erfolgte dann nacheinander die Zugabe der zur Ionenbildung befähigten Komponente Dimethylolpropionsäure sowie drei Viertel der Menge an zugesetztem inerten Lösungsmittel, z.B. N-Methyl-2-pyrrolidon. Bei Temperaturen zwischen 50 und 70°C wurde dann die Isocyanatmischung zugegeben und anschließend auf Temperaturen zwischen 80 bis 90°C erhitzt. Es wurde ein freier NCO-Gehalt unter 5,5 Gew.-% angefahren, wobei zu berücksichtigen ist, daß bei der gewählten Titrationsmethode (Dibutylamin-Lösung) unter diesen Wert auch der Verbrauch an Dibutylamin-Lösung für die Neutralisation der Dimethylpropionsäure enthalten ist. Nach 4 bis 5 Stunden wurde die Polymermischung auf 60°C gekühlt und neutralisiert, z.B. mit N-Methylmorpholin. Nach einer Dauer von ca. 30 Min. erfolgte abschließend die Zugabe von Wasser.

### Beispiel 1

Analog der allgemeinen Herstellvorschrift 1 wurde eine wäßrige Polyurethandispersion hergestellt aus:

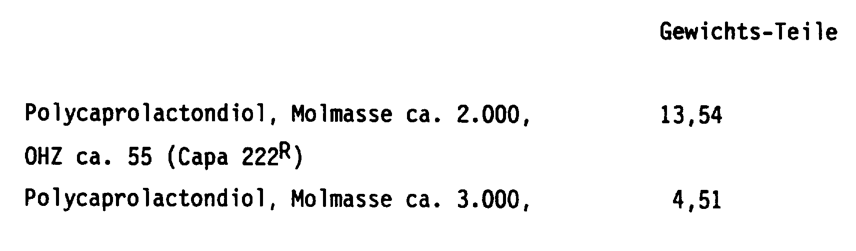

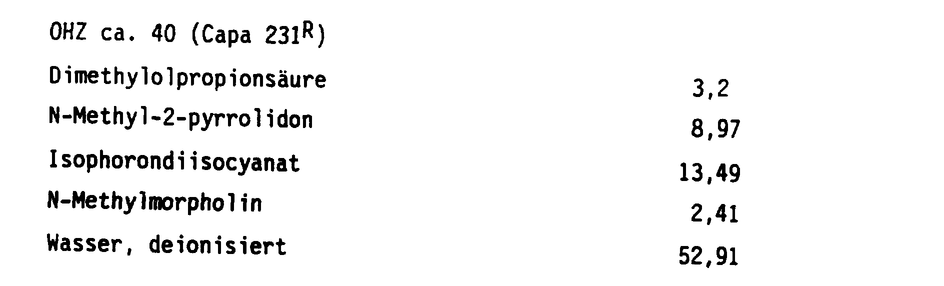

### Allgemeine Herstellvorschrift 2

Das neutralisierte Prepolymer nach allgemeiner Herstellvorschrift 1 wurde unter laufendem Rührer möglichst schnell zu der in Beispiel 1 genannten Wassermenge hineinbefördert. Zunächst wurden die Dispersionen etwa 1 1/2 Stunden bei mittlerer Rührdrehzahl gerührt, anschließend wurden bei Temperaturen von etwa 60 bis 70°C weitere 3 Stunden mit geringerer Rührdrehzahl gerührt. Danach wurde die Dispersion unter 40°C gekühlt und mit 10 %-igem Ammoniak (ca. 0,67 Gewichtsteile berechnet auf Beispiel 1) versetzt.

### Anwendungsbeispiele

### Beispiel 2

### Zurichtung von Möbelleder(krust)

### Grundierung:

100 Gew.-Teile einer wäßrigen Pigmentpräparation wurde mit 150 Gew.-Teilen der Polyurethandispersion nach Beispiel 1 vermischt. Dazu wurden 60 Gew.-Teile einer Wachsdispersion, 20 Gew.-Teile einer wäßrigen Mattierungshilfe sowie 350 Gew.-Teile Wasser gegeben. Die Flotte wird 3 bis 4 mal gespritzt. Überprüfung der Reibechtheit nach DIN 53339 zeigen bei 1.000 Reibungen auf einem trockenen Filz keine Beschädigungen und bei 300 Reibungen auf einem naßen Filz ebenfalls keine Beschädigungen. Tests für das Dauerbiegeverhalten im BallyFlexometer (Din 53351) zeigen trocken bei 100.000 Knickungen keine Beschädigung und naß bei 20.000 Knickungen ebenfalls keine Beschädigung.

### Anwendungsbeispiel 2

### Herstellung einer Druckfarbe

60 Teile der Polyurethandispersion nach Beispiel 1 mit einem Feststoffgehalt von etwa 35 %, bezogen auf Polyurethandispersion, wurden mit 20 Gew.-Teilen Wasser, 15 Gew.-Teilen Isopropanol sowie 3 Gew.-Teilen von Pigmentzubereitungen, die auf üblichem Wege hergestellt wurden, vermischt. Die Druckfarbe ist für den Sieb-, Tief- und Flexodruck geeignet und zeigt schnelle Antrocknung sowie hervorragende Haftung.

### Anwendungsbeispiele 3 bis 12

(Anwendungsbeispiele 3 und 4: erfindungsgemäß)
(Anwendungsbeispiele 5 - 12: Vergleichsbeispiele)

Die Dispersion wurde nach Herstellvorschrift 2 und anschließend daraus Druckfarben wie in Anwendungsbeispiel 2 hergestellt.

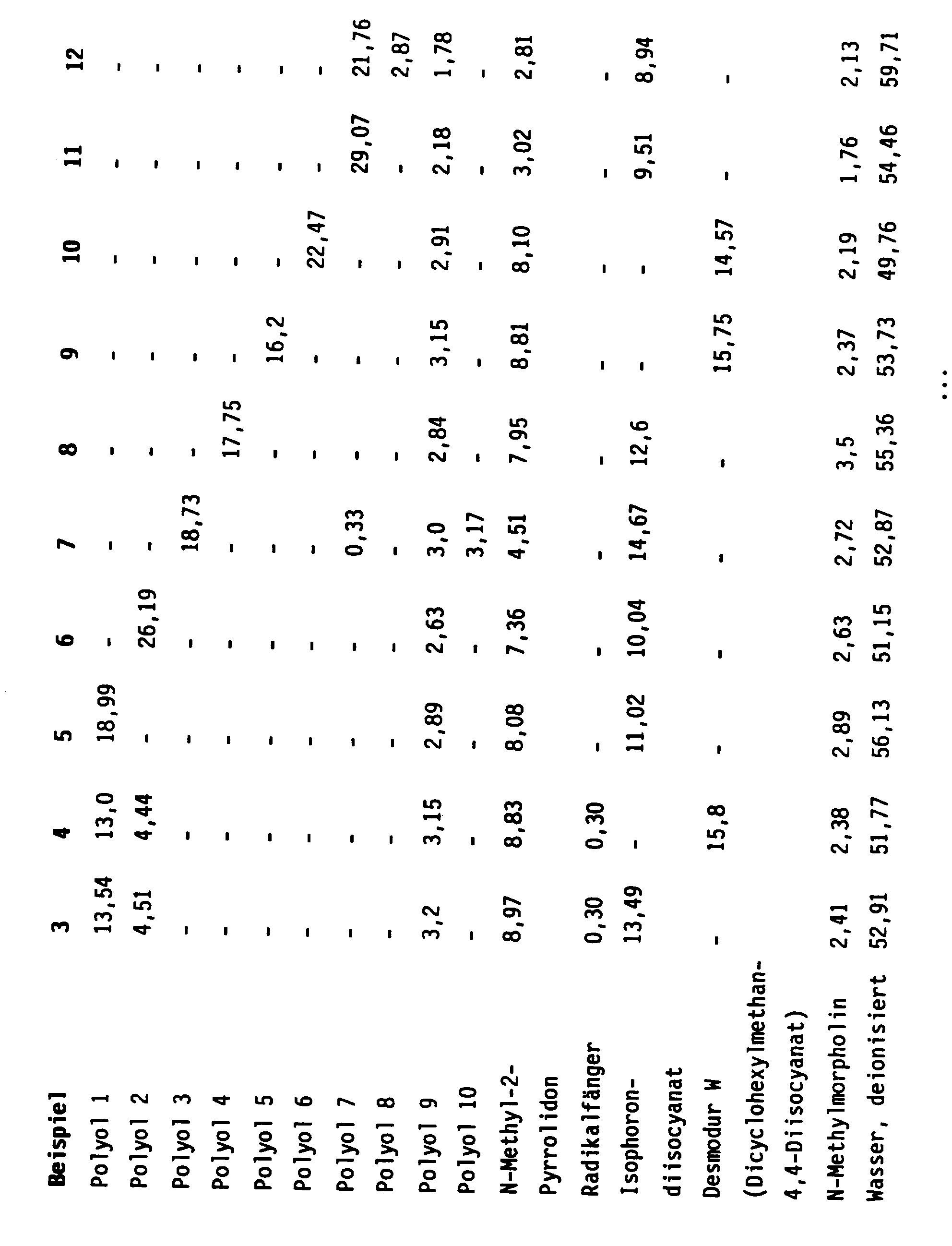

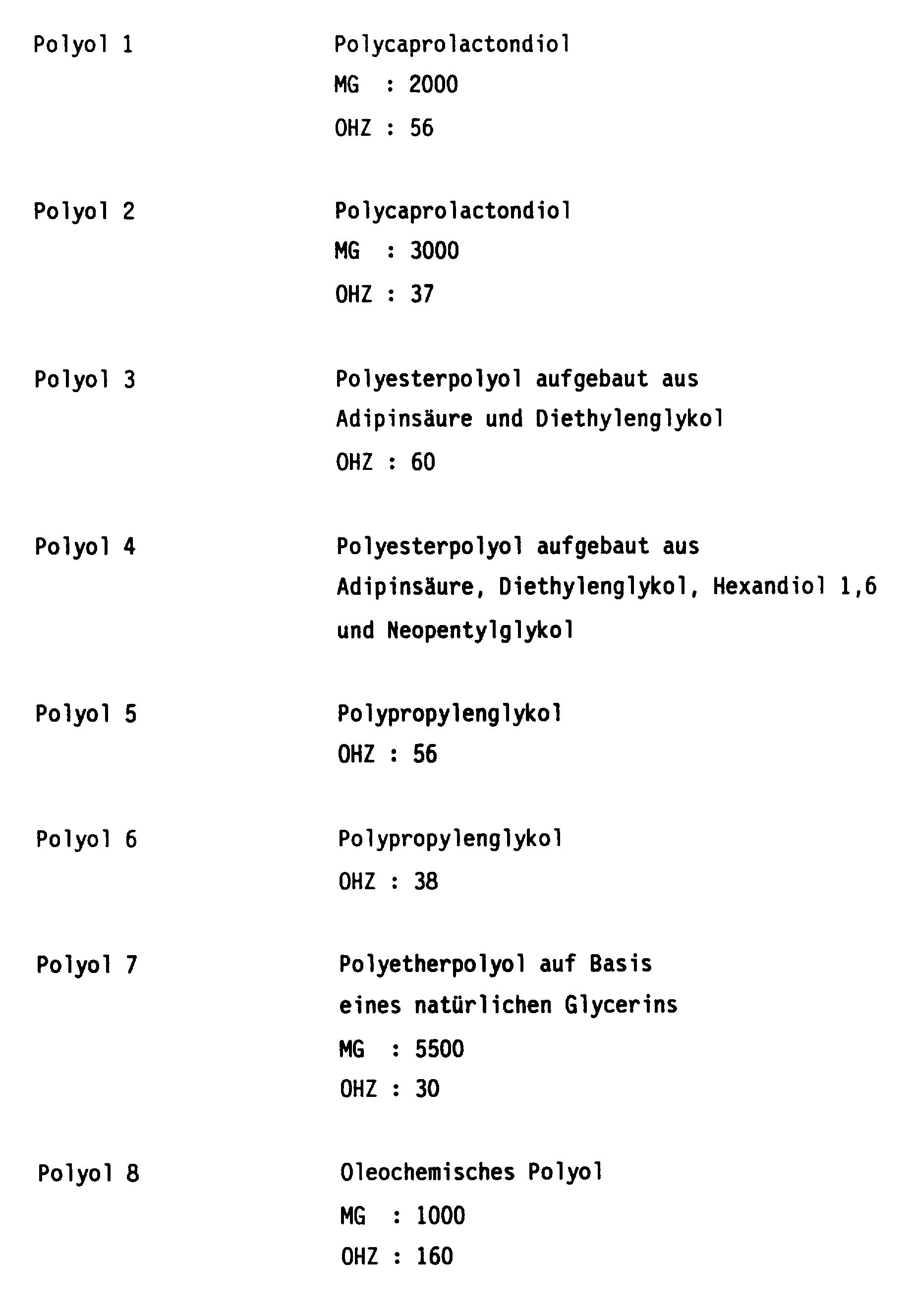

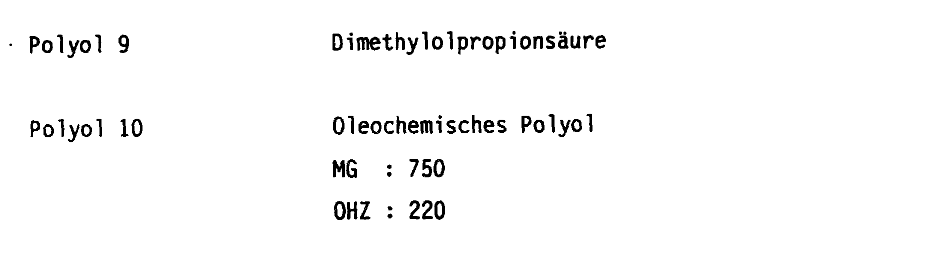

### Test auf Alkoholfestigkeit

Die Druckfarben wurden mittels Rakel in 100 um Schichtstärke auf Weich-PVC-Folie aufgezogen, 1 Minute bei 90 °C getrocknet und ein Teile der Oberfläche nach dem Abkühlen auf Raumtemperatur mit einem mit Ethanol/Wasser (60/40 Gew.-Teile) durchtränkten Wattebausch belastet (der Wattebausch wurde mit einem Uhrglas bedeckt, um die Austrocknung zu verhindern).

Die belasteten Oberflächen wurden dann visuell nach 10 bis 240 Minuten beurteilt.

### Visuelle Auswertung:

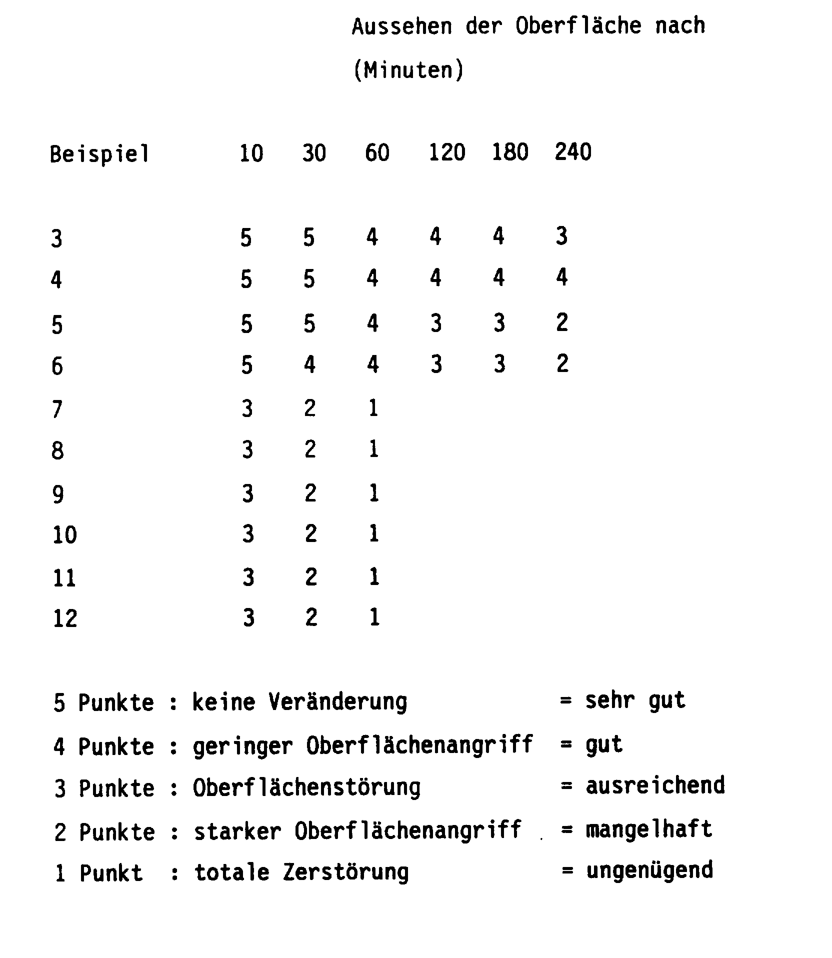

## Patentansprüche

1. Beschichtungsmittel für flexible Substrate, enthaltend eine wäßrige Polyurethandispersion, deren Polyurethane aufgebaut sind aus einer zumindest überwiegend aus Polycaprolactondiolen bestehenden Polyolmischung, einer Isocyanatmischung mit einer mittleren NCO-Funktionalität über 1,5 im Verhältnis NCO : OH wie 0,9 : 1 bis 2,5 : 1 sowie aus in wäßriger Lösung zur Salzbildung befähigten funktionellen Komponenten und gewünschtenfalls Kettenverlängerungsmitteln, dadurch gekennzeichnet, daß die Polycaprolactondiole Mischungen zweier verschiedener Polycaprolactondiole A und B darstellen, wobei Polycaprolactondiol A ein Molekulargewicht von 1.500 bis 2.250 sowie eine Hydroxylzahl zwischen 45 und 75 und Polycaprolactondiol B ein Molekulargewicht von 2.750 bis 4.000 sowie eine Hydroxylzahl von 25 bis 45 aufweist.

2. Beschichtungsmittel nach Anspruch 1, dadurch gekennzeichnet, daß die den Polyurethandispersionen zugrundeliegenden Polyurethane aus einer Polyolmischung aufgebaut sind, die zu 60 bis 100 Gew.-% aus der Polycaprolactondiol-Mischung gemäß Anspruch 1 und zu 0 bis 40 Gew.-% aus einem Polyetherpolyol, Polytetrahydrofuran und/oder Polyesterpolyol mit im Mittel 2 bis höchstens 4 OH-Gruppen bestehen.

3. Beschichtungsmittel nach einem der Ansprüche 1 oder 2, dadurch gekennzeichnet, daß die den Polyurethandispersionen zugrundeliegenden Polyurethane aus einer Polyolmischung aufgebaut sind, die zu 85 bis 100 Gew.-%, vorzugsweise vollständig aus Polycaprolactondiol-Mischungen gemäß Anspruch 1 besteht.

4. Beschichtungsmittel nach einem der Ansprüche 1 bis 6, dadurch gekennzeichnet, daß die den Polyurethandispersionen zugrundeliegenden Polyurethane aus einer Isocyanatmischung von aliphatischen und/oder aromatischen Isocyanaten, Diisocyanaten und mehrfunktionellen Isocyanaten mit einer mittleren NCO-Funktionalität über 1,5 und vorzugsweise von 2 bis 3 aufgebaut sind.

5. Beschichtungsmittel nach einem der Ansprüche 1 bis 7, dadurch gekennzeichnet, daß die den Polyurethandispersionen zugrundeliegenden Polyurethane aus aliphatischen Diisocyanaten aufgebaut sind, vorzugsweise aus Isophorondiisocyanat, Hexan-1,6-diisocyanat und/oder Dicyclohexylmethandiisocyanat.

6. Beschichtungsmittel nach einem der Ansprüche 1 bis 8, dadurch gekennzeichnet, daß die den Polyurethandispersionen zugrundeliegenden Polyurethane eine in wäßriger Lösung zur Salzbildung befähigte Komponente, ausgewählt aus der Gruppe der Dihydroxycarbonsäuren oder Dihydroxysulfonsäuren einkondensiert enthalten, gegebenenfalls in Form von Alkalisalzen, Ammoniumsalzen oder als Salze primärer, sekundärer oder tertiärer Amine.

7. Beschichtungsmittel nach einem der Ansprüche 1 bis 9, dadurch gekennzeichnet, daß die den Polyurethandispersionen zugrundeliegenden Polyurethane als Kettenverlängerungsmittel, gegenüber Isocyanatgruppen reaktive Diamine enthalten können vorzugsweise in geringen Mengen enthalten.

8. Beschichtungsmittel nach einem der Ansprüche bis 10, dadurch gekennzeichnet, daß die Polyurethandispersionen einen Feststoffgehalt von 30 bis 60 Gew.-%, vorzugsweise 35 bis 55 Gew.-% aufweisen.

9. Beschichtungsmittel nach einem der Ansprüche 1 bis 11, dadurch gekennzeichnet, daß sie Polyurethandispersionen in Mengen von 5 bis 80 Gew.-%, vorzugsweise von 20 bis 75 Gew.-%, insbesondere von 50 bis 70 Gew.-% enthalten.

10. Beschichtungsmittel nach einem der Ansprüche bis 12, dadurch gekennzeichnet, daß sie neben der Polyurethandispersion Wasser in Mengen von 2 bis 80 Gew.-%, ein mit Wasser mischbares organisches Lösungsmittel in Mengen von 0 bis 50 Gew.-% sowie weitere übliche Hilfszusätze wie Pigmente, Netz- und Konservierungsmittel und/oder Absetzmittel in Mengen von 0 bis 80 Gew.-% enthalten.

11. Verwendung der Beschichtungsmittel nach einem der Ansprüche 1 bis 13 zur Herstellung von Überzügen und Beschichtungen auf flexiblen Substraten, vorzugsweise auf Leder, Lederaustauschstoffen und flexiblen Kunststoffen.

12. Beschichtungsmittel nach Anspruch 10, dadurch gekennzeichnet, daß die den Polyurethandispersionen zugrunde liegenden Polyurethane keine Kettenverlängerungsmittel enthalten.

## Claims

1. Coating compositions for flexible substrates containing an aqueous polyurethane dispersion of which the polyurethanes are synthesized from a polyol mixture consisting at least predominantly of polycaprolactone diols, an isocyanate mixture having an average NCO functionality of more than 1.5 in an NCO:OH ratio of 0.9:1 to 2.5:1 and from functional components capable of salt formation in aqueous solution and, optionally, chain-extending agents, characterized in that the polycaprolactone diols are mixtures of two different polycaprolactone diols A and B, polycaprolactone diol A having a molecular weight of 1,500 to 2,250 and a hydroxyl value of 45 to 75 and polycaprolactone diol B having a molecular weight of 2,750 to 4,000 and a hydroxyl value of 25 to 45.

2. Coating compositions as claimed in claim 1, characterized in that the polyurethanes on which the polyurethane dispersions are based are synthesized from a polyol mixture of which 60 to 100% by weight consists of the polycaprolactone diol mixture according to claim 1 and 0 to 40% by weight of a polyether polyol, polytetrahydrofuran and/or polyester polyol containing on average 2 to at most 4 OH groups.

3. Coating compositions as claimed in claim 1 or 2, characterized in that the polyurethanes on which the polyurethane dispersions are based are synthesized from a polyol mixture of which 85 to 100% by weight and preferably 100% by weight consists of polycaprolactone diol mixtures according to claim 1.

4. Coating compositions as claimed in any of claims 1 to 3, characterized in that the polyurethanes on which the polyurethane dispersions are based are synthesized from an isocyanate mixture of aliphatic and/or aromatic isocyanates, diisocyanates and polyfunctional isocyanates having an average NCO functionality above 1.5 and preferably of 2 to 3.

5. Coating compositions as claimed in any of claims 1 to 4, characterized in that the polyurethanes on which the polyurethane dispersions are based are synthesized from aliphatic diisocyanates, preferably from isophorone diisocyanate, 1,6-hexane diisocyanate and/or dicyclohexyl methane diisocyanate.

6. Coating compositions as claimed in any of claims 1 to 5, characterized in that the polyurethanes on which the polyurethane dispersions are based contain a co-condensed component capable of salt formation in aqueous solution selected from the group of dihydroxycarboxylic acids or dihydroxysulfonic acids, optionally in the form of alkali metal salts, ammonium salts or as salts of primary, secondary or tertiary amines.

7. Coating compositions as claimed in any of claims 1 to 6, characterized in that the polyurethanes on which the polyurethane dispersions are based may contain isocyanatereactive diamines as chain-extending agents, preferably in small quantities.

8. Coating compositions as claimed in any of claims 1 to 7, characterized in that the polyurethane dispersions have a solids content of 30 to 60% by weight and preferably 35 to 55% by weight.

9. Coating compositions as claimed in any of claims 1 to 8, characterized in that they contain polyurethane dispersions in quantities of 5 to 80% by weight, preferably in quantities of 20 to 75% by weight and, more preferably, in quantities of 50 to 70% by weight.

10. Coating compositions as claimed in any of claims 1 to 9, characterized in that, in addition to the polyurethane dispersion, they contain water in quantities of 2 to 80% by weight, a water-miscible organic solvent in quantities of 0 to 50% by weight and other typical additives, such as pigments, wetting agents and preservatives and/or sedimenting agents, in quantities of 0 to 80% by weight.

11. The use of the coating compositions claimed in any of claims 1 to 12 for the production of coatings on flexible substrates, preferably leather, leather substitutes and flexible plastics.

12. Coating compositions as claimed in claim 10, characterized in that the polyurethanes on which the polyurethane dispersions are based contain no chain-extending agent.

## Revendications

1. Enduits pour les substrats flexibles, renfermant une dispersion aqueuse de polyuréthanes, dont les polyuréthanes sont constitués d'un mélange de polyols se composant au moins en majeure partie de polycaprolactonediols, d'un mélange d'isocyanates avec une fonctionnalité NCO moyenne supérieure à 1,5 dans un rapport NCO:OH compris dans l'intervalle de 0,9:1 à 2,5:1, ainsi que d'un composant fonctionnel apte à la salification en solution aqueuse et, le cas échéant, d'agents d'allongement de chaîne, caractérisés en ce que les polycaprolactonediols représentent des mélanges de deux polycaprolactonediols différents A et B, le polycaprolactonediol A possédant un poids moléculaire de 1500 à 2250 et un indice d'hydroxyle compris entre 45 et 75 et le polycaprolactonediol B présentant un poids moléculaire de 2750 à 4000 et un indice d'hydroxyle situé entre 25 et 45.

2. Enduits selon la revendication 1, caractérisés en ce que les polyuréthanes à la base des dispersions de polyuréthanes se composent d'un mélange de polyols, qui est constitué à 60 à 100 % en poids du mélange de polycaprolactonediols conforme à la revendication 1 et à 0 à 40 % en poids d'un polyétherpolyol, d'un polytétrahydrofurane et/ou d'un polyesterpolyol comportant en moyenne 2 à, au maximum, 4 groupes hydroxyle.

3. Enduits selon une des revendications 1 ou 2, caractérisés en ce que les polyuréthanes à la base des dispersions de polyuréthanes se composent d'un mélange de polyols, qui est constitué à 85 à 100 % en poids, de préférence complètement, de mélanges de polycaprolactonediols conformes à la revendication 1.

4. Enduits selon une des revendications 1 à 6, caractérisés en ce que les polyuréthanes à la base des dispersions de polyuréthanes se composent d'un mélange d'isocyanates constitué d'isocyanates, de diisocyanates et d'isocyanates polyfonctionnels aliphatiques et/ou aromatiques, avec une fonctionnalité NCO supérieure à 1,5 et de préférence de 2 à 3.

5. Enduits selon une des revendications 1 à 7, caractérisés en ce que les polyuréthanes à la base des dispersions de polyuréthanes se composent de diisocyanates aliphatiques, de préférence d'isophoronediisocyanate, d'hexane-1,6-diisocyanate et/ou de dicyclohexylméthanediisocyanate.

6. Enduits selon une des revendications 1 à 8, caractérisés en ce que les polyuréthanes à la base des dispersions de polyuréthanes renferment sous forme incorporée par condensation un composant apte à la salification en solution aqueuse, sélectionné parmi le groupe constitué des acides dihydroxycarboxyliques ou dihydroxysulfoniques, le cas échéant sous forme de sels de métaux alcalins, de sels d'ammonium ou de sels d'amines primaires, secondaires ou tertiaires.

7. Enduits selon une des revendications 1 à 9, caractérisés en ce que les polyuréthanes à la base des dispersions de polyuréthanes peuvent renfermer, de préférence en faibles quantités, comme agent d'allongement de chaîne, des diamines réactives vis-à-vis des groupes isocyanate.

8. Enduits selon une des revendications 1 à 10, caractérisés en ce que les dispersions de polyuréthanes présentent une concentration en matières solides de 30 à 60 % en poids, de préférence, de 35 à 55 % en poids.

9. Enduits selon une des revendications 1 à 11, caractérisés en ce qu'ils renferment les dispersions de polyuréthanes en proportions de 5 à 80 % en poids, de préférence de 20 à 75 % en poids, en particulier de 50 à 70 % en poids.

10. Enduits selon une des revendications 1 à 12, caractérisés en ce qu'ils renferment en plus de la dispersion de polyuréthane, de l'eau en proportions de 2 à 80 % en poids, un solvant organique miscible à l'eau en proportions de 0 à 50 % en poids, ainsi que d'autres additifs adjuvants usuels, tels que pigments, agents mouillants et conservateurs et/ou agents de sédimentation et assimilés, en quantités de 0 à 80 % en poids.

11. Utilisation des enduits selon une des revendications 1 à 13 pour la réalisation de revêtements et de recouvrements sur des substrats flexibles, de préférence sur du cuir, des succédanés du cuir et des matières plastiques flexibles.

12. Enduits selon la revendication 10, caractérisés en ce que les polyuréthanes à la base des dispersions de polyuréthanes ne renferment aucun agent d'allongement de chaîne.
